# EUROPÄISCHE PATENTSCHRIFT

(11) **EP 0 622 313 B1**
(45) Veröffentlichungstag und Bekanntmachung des Hinweises auf die Patenterteilung: **26.02.1997**
(21) Anmeldenummer: 94106536.9
(22) Anmeldetag: 27.04.1994
(51) Int. Cl.: B65G 1/10, B65G 1/04, B65G 37/02

(54) **Hochgeschwindigkeitbereitstellungs- und Transporteinrichtung**
High speed preparing and transporting device
Dispositif de préparation et de transport à grande vitesse

(30) Priorität: 28.04.1993 DE 4313884
(43) Veröffentlichungstag der Anmeldung: 02.11.1994
(73) Patentinhaber: FRAUNHOFER-GESELLSCHAFT ZUR FÖRDERUNG DER ANGEWANDTEN FORSCHUNG E.V., 80636 München (DE)
(72) Erfinder: Gottlieb, Stephan, Dipl.-Ing., D-58313 Herdecke (DE)

(56) Entgegenhaltungen:
- DE-A- 3 616 953
- DE-A- 4 204 943
- DE-C- 3 824 328

## Beschreibung

Die Erfindung betrifft eine Hochgeschwindigkeitbereitstellungs- und Transporteinrichtung zum Einsatz insbesondere im Lager- und Sortierbereich sowie bei Produktions-und Kommissioniersystemen.

Es sind verschiedene Einrichtungen zur Verbesserung der Transportleistung in dem gesamten Lager- und Sortierbereich bekannt. So sind z.B. aus "heben und fördern", 29 (1979), S. 630 ff oder "Industrie-Anzeiger" 1976, Seite 1769 ff Einrichtungen bekannt, die in dem genannten Bereich einsetzbar sind, jedoch machen sie von Einzelkomponenten Gebrauch, die eine begrenzte Leistungssteigerung erlauben, so daß bei 20 Stellplätzen insgesamt eine Positionierzeit von der hintersten Position in eine vorderste Abgabeposition ca. 30 - 45 sec. beträgt. Weiterhin ist aus dem Dokument DE-A-3 824 328 eine Transporteinrichtung mit Drehteller bekannt, die zur Beschickung einer Vertikallages eingesetzt wird.

Aufgabe der vorliegenden Erfindung ist es, eine mit hoher Geschwindigkeit arbeitende und eine hohe Leistung aufweisende Bereitstellungs- und Transporteinrichtung anzugeben.

Die Aufgabe ist durch die Merkmale des Anspruchs 1 gelöst. Der Anspruch 7 gibt das Verfahren an, nach dem Güter mit der angegebenen Einrichtung transportiert bzw. bereitgestellt werden. Weiterbildungen der Erfindung sind Gegenstand der Unteransprüche.

Erfindungsgemäß weist die Hochgeschwindigkeitbereitstellungs- und Transporteinrichtung eine auf einer Führung/einen Schlitten verfahrbare und drehbare Transportplattform auf, mittels welcher mit zu transportierenden Gütern versehene Bodenträger von Stellplätzen entnommen und auf andere anforderungsspezifische Plätze abgegeben werden. Der Transportplattform kann somit ein anwendungsspezifisches Geschwindigkeits-/und Beschleunigungsprofil aufgegeben werden. Um optimale Geschwindigkeiten zu erreichen, ist die Transportplattform gegenüber der Linearführung bzw. dem Linearschlitten verdrehbar, so daß sie während des Verfahrvorganges so verdreht werden kann, daß dem darauf angeordneten Bodenträger die für den Transportvorgang günstigste Orientierung gegeben werden kann. Eine günstige Orientierung des Bodenträgers ist insbesondere in der Beschleunigungsphase des Transportes wesentlich. Die Transportplattform weist ferner einen Ein-bzw. Ausschleusmechanismus für den Bodenträger auf. Mit diesem Mechanismus wird der Bodenträger mit seinem Aufbau von dem Stellplatz auf die Transportplattform gebracht. Umgekehrt kann der Bodenträger von der Transportplattform auf einen anderen Abgabeplatz (z.B. eine Drehplattform oder einen anderen Stellplatz) gebracht werden. Der Ein- und Ausschleusvorgang kann zu allen Seiten der Transportplattform geschehen, da diese gegenüber der Linearschlitteneinheit verdrehbar ist. Vorteilhafterweise befindet sich auf der Transportplattform eine Fixiereinrichtung, die beim Transportvorgang eine feste Verbindung zwischen dem Bodenträger und der Transportplattform gewährleistet. Die Stell- und Abgabeplätze sind mit Drehplattformen ausgestattet, wodurch sie zu dynamisch anpaßbaren Entnahme bzw. Bereitstellungsstationen werden. Durch den Einsatz der Drehplattformen ist eine dynamische Entnahme-orientierung und -position sichergestellt. Der Ein- bzw. Ausschleusmechanismus besteht aus entsprechenden Linearlager bzw. Rotationslager mit den dazu notwendigen Antriebsaggregaten und Antriebskoppeleinrichtungen wie z.B. Linearriemenantrieb oder Zykloidengetriebe.

Die Linearantriebseinheit hat eine Positioniergenauigkeit im 1/10 Millimeterbereich, die Drehantriebseinheit der Hochgeschwindigkeitsplattform weist eine Positioniergenauigkeit im Bogenminutenbereich auf. Die Ausschleuseinheit hat eine Positioniergenauigkeit im Zehntel Millimeterbereich.

Es können eine oder mehrere auf einer Linearführung verfahrbare und gegenüber dieser verdrehbare Transportplattformen vorhanden sein. Die Linearführung kann durch einen Linearschlitten realisiert sein.

Der Transportzyklus ist der Produktbelastbarkeit wegen seines frei gestaltbaren Geschwindigkeits-und Beschleunigungsprofils anpaßbar werden. Die Transportplattform kann vor jeder Entnahme- und Bestückungsposition aufgrund des Linearantriebs genauestens positioniert werden. Der Linearantrieb weist die Ausgestaltung einer Umlaufriemenanordnung, eines Spindelantrieb, eines Zahnradantrieb oder dergleichen auf Die Transportplattform wird mittels Linearführungen an den Entnahme- und Bestückungsorten entlanggeführt.

Die an den Abgabe- und/oder Stellplätzen angeordneten Drehplattformen lassen sich um +/- 90 Grad verdrehen. Der Plattformdrehpunkt befindet sich im Flächenschwerpunkt. In dem Drehbereich kann jede Plattform jede beliebige Drehposition annehmen. Die Drehbewegung ist mit jedem beliebigen Antriebsaggregat wie z.B. einem Servomotor ausführbar. Mit der Drehplattform ist es möglich, die auf ihr befindlichen Bodenträger zur Bestückung des Bodenträgeraufbaus bzw. zur Entnahme des im Bodenträgeraufbau befindlichen Lagergutes in die anwendungspezifische Orientierung zu bringen. Weiterhin weist die Drehplattform eine Linearverschiebeeinrichtung auf. Bei dieser Linearverschiebeeinrichtung handelt es sich um einen Linearverschiebemechanismus mit dem es möglich ist, den auf der Drehplattform befindlichen Bodenträger auf eine nachfolgend angeordnete Plattform zu verschieben. Dies ist, z.B. beim Verschieben der leeren Bodenträger zu dem Variostellplatz wesentlich.

Gemäß einer vorteilhaften Ausgestaltung nach Anspruch 5 weist der Bodenträger an seiner Unterseite Befestigungseinrichtungen auf, die während des Transportes die Verbindung zwischen Bodenträger und Transporteinrichtung gewährleisten. Ferner befinden sich auf der Unterseite des Bodenträgers Bodenrollen zur einfachen Bewegung des Bodenträgers in alle Richtungen unter beliebiger Orientierung. Auf der Oberseite weist der Bodenträger eine Aufnahme für beliebige Aufbauten auf, z.B. kann ein auf dem Bodenträger befindlicher Aufbau an der Kopfseite mit einem Kopfadapter versehen werden, der eine Standardschnittstelle zu fast allen im Materialfluß befindlichen Transportsystemen, solchen wie Regalförderzeug, Stapler, Roboter usw. darstellt. Auf dem Bodenträger können beliebige Aufbauten angebracht werden, z.B. ein Mehrbodenregal, bei dem sich in jeder Regalebene, die in mehrere Fächer unterteilt werden kann, zu kommissionierende Objekte befinden.

Ein Verfahren zur Bereitstellung und Transport von Gütern/Objekten wird ausführlich anhand des nachfolgend beschriebenen und in den Figuren dargestellten Ausführungsbeispiels der Erfindung beschrieben. Es zeigen:

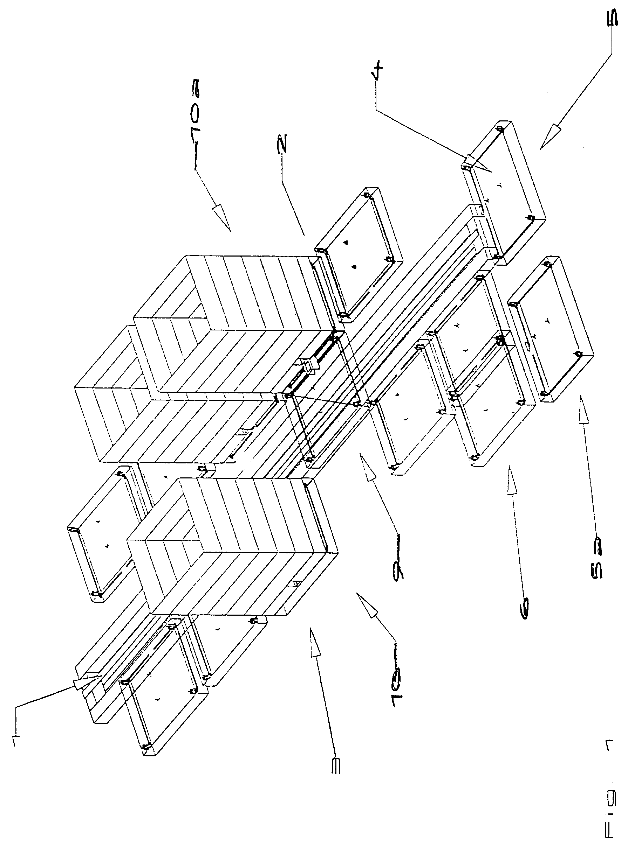

- Fig. 1:: eine Hochgeschwindigkeitbereitstellungs- und Transporteinrichtung

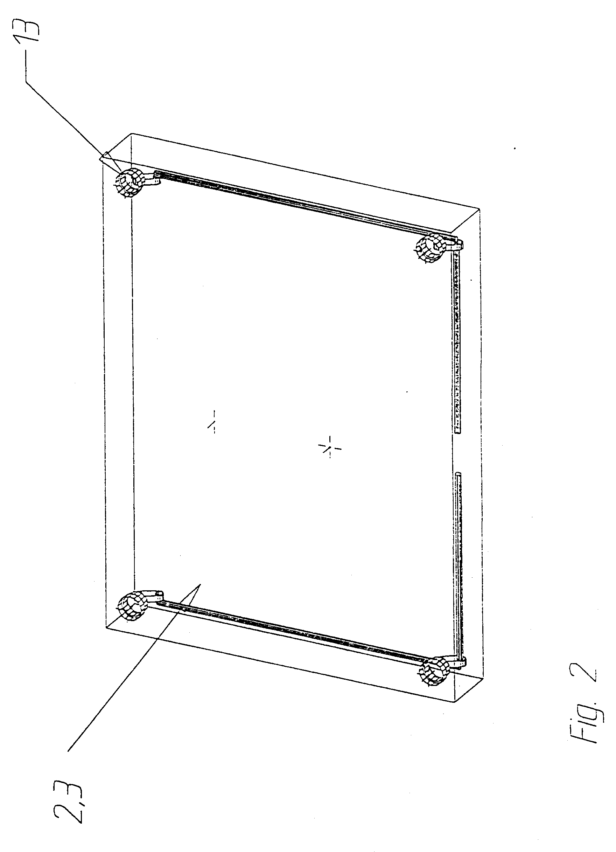

- Fig. 2:: eine Darstellung eines Stellplatzes
- Fig. 3:: eine Darstellung eines Bodenträgers
- Fig. 4:: einen Aufbau für einen Bodenträger

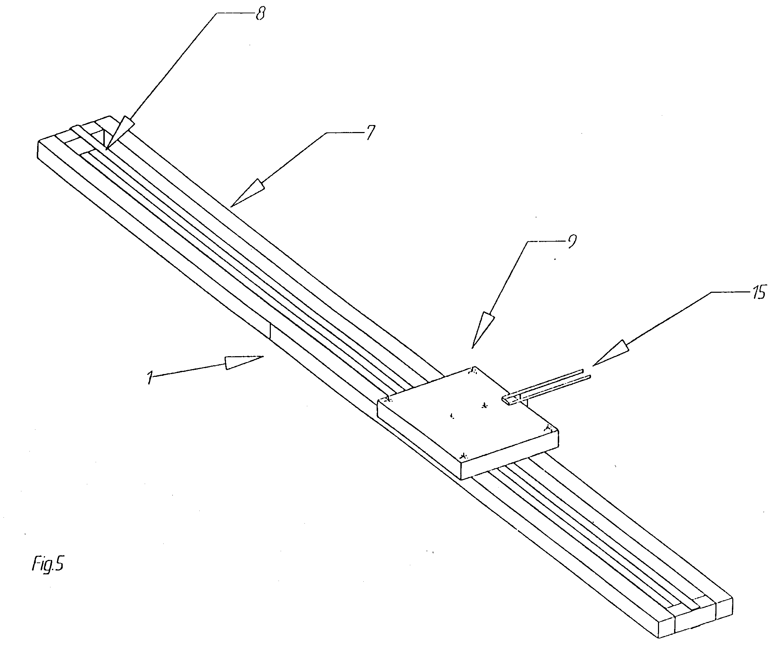

- Fig. 5:: die Linearentnahme- und Transporteinheit bei der Aufnahme eines Bodenträgers

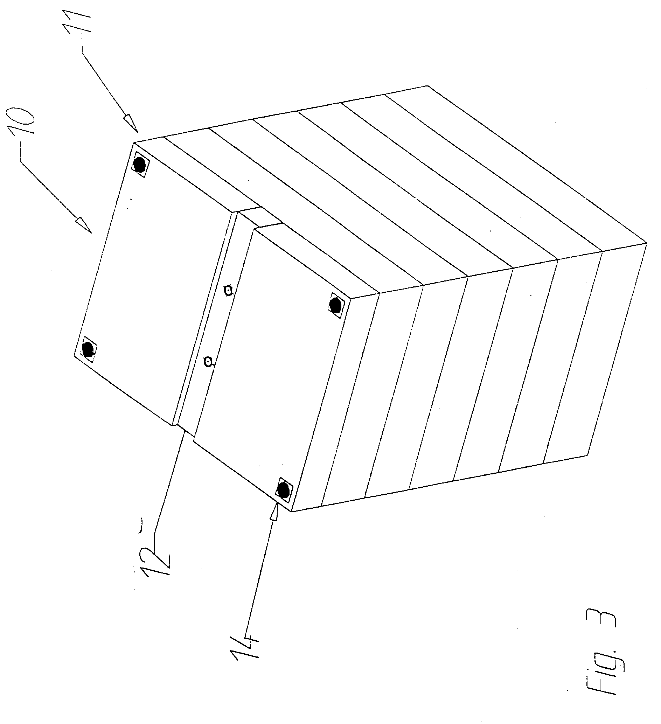

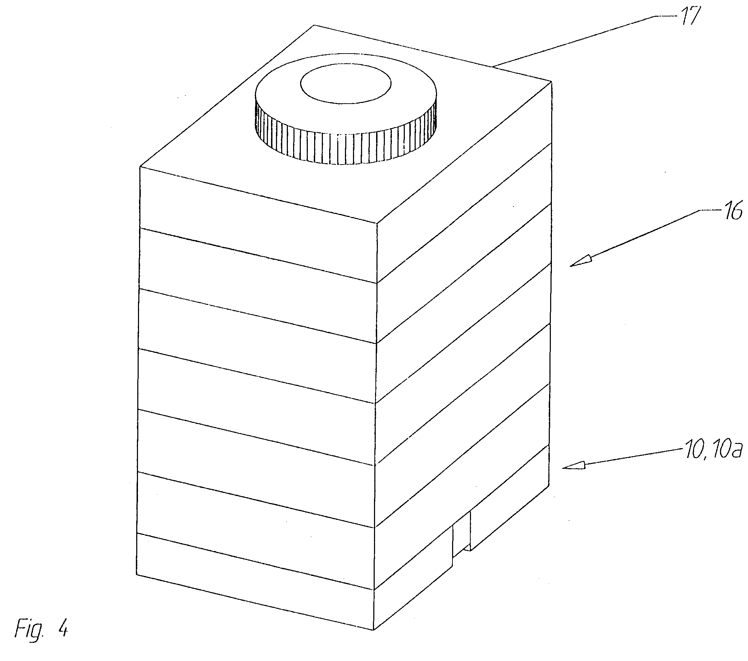

Die Hochgeschwindigkeitbereitstellungs- und Transporteinrichtung weist eine Linearentnahme und Transporteinheit 1, Stellplätze 2, 3, einen Abgabeplatz 4 mit Drehplattformen 5, 5a und einen Variostellplatz 6 auf. Die Linearentnahme und Transporteinheit 1 weist eine Linearführung 7 auf, deren Antriebssystem aus einer Umlaufriemenanordnung 8 besteht und einer darauf angeordneten und durch den Linearschlitten geführte Hochgeschwindigkeitsplattform 9. Die Hochgeschwindigkeitsplattform 9 ist gegenüber der Linearführungseinheit/dem Linearführungsschlitten 7 verdrehbar. An jedem der Stellplätze 2, 3 befinden sich Bodenträger 10, die auf die Transportplattform 9 aufgenommen und transportiert werden. Der in Fig. 3 näher dargestellte Bodenträger 10 ist eine rechteckig geformte Platte und weist Bodenrollen 11 sowie ein Fixiergehäuse 12, die während des Transportes die Verbindung zwischen Bodenträger 10 und der Transportplattform 9 gewährleisten. Der Stellplatz 2, 3 weist entsprechende Versenkeinrichtungen 13 auf in denen die Bodenträgerrollen 11 des Bodenträgers 10 versenkt werden. Weiterhin ist der Bodenträger 10 mit einer Zentriereinrichtung 14, die in die Versenkeinrichtung 13 integriert ist, gegen Verschieben gesichert. Die Zentriereinrichtung 14 garantiert eine reproduzierbare Position des Bodenträgers am Stellplatz 2, 3. Die Transportplattform 9 löst durch die Fixiereinrichtung und den Entnahmemechanismus 15, den Bodenträger 10 aus seiner Fixierung 14, indem sie in die Befestigungseinrichtung 12 des Bodenträgers 10 eingreift. Der Bodenträger 10 kann gemäß Ausgestaltung nach Fig. 4 einen Aufbau 16, der an der Kopfseite mit einem Kopfadapter 17 versehen ist aufweisen, der durch eine Schnittstelle, z.B. ein anderes Transportsystem wie Regalförderzeug, Stapler gebildet ist.

Die Wirkungsweise der Hochgeschwindigkeitbereitstellungs- und Transporteinrichtung ergibt sich aus dem nachfolgend beschriebenen Verfahrensablauf:

Zu Anfang des Transportvorganges befindet sich der Bodenträger 10 am Stellplatz 2. Er soll nun von seinem Stellplatz 2 zu dem Abgabeplatz 4 gebracht werden, wobei die Orientierung des Bodenträgers 10 um 90 Grad verändert werden soll, da hier z.B. durch einen Roboter ein Objekt aus dem Bodenträgeraufbau entnommen werden soll.
- Die Transportplattform 9 wird mittels des Linearriemenantriebs 8 vor den Stellplatz 2 des Bodenträgers 10 positioniert. Danach wird mit dem in der Transportplattform 9 befindlichen Fixiereinrichtung und Entnahmemechanismus 15 der Bodenträger 10 auf die Transportplattform 9 gezogen.
- Befindet sich nun der Bodenträger 10 auf der Transportplattform 9, wird durch Einrasten der in der Transportplattform 9 befindlichen Fixiereinrichtung und Entnahmemechanismus 15 und dem im Bodenträger 10 befindlichen Fixiergehäuse 12 eine feste Verbindung zwischen der Transportplattform 9 und dem Bodenträger 10 hergestellt. Damit ist selbst bei großen Beschleunigungen und Verzögerungen bzw. bei hohen Geschwindigkeiten eine sichere Arretierung auf der Transportplattform 9 gewährleistet.
- Die Transpsortplattform 9 wird mitsamt dem Bodenträger 10 in Richtung der Drehplattform 5 verfahren. Das Geschwindigkeits- und Beschleunigungsprofil ist produktspezifisch gestaltet.
- Der Bodenträger 10 wird von der Transportplattform 9 auf die Drehplattform 5 überführt und auf der Drehpplattform 5 durch den gleichen Fixiermechanismus (wie auf der Transportplattform 9) mit der Drehplattform 5 verbunden.
- Der Bodenträger 10 wird von der Drehplattform 5 mittels der Linearverschiebeeinrichtung 16, auf die Drehplattform 5a verschoben und dort durch den gleichen Fixiermechanismus wie auf der Transportplattform 9 arretiert.
- In der Zwischenzeit hat die Transportplattform 9 bereits einen neuen Bodenträger 10a vom Stellplatz 3 entnommen, und diesen auf die freigewordene Drehplattform 5 ausgeschleust.
- Durch die entsprechenden Drehbewegungen der Drehplattformen 5 und 5a werden die Bodenträger 10, 10a in die jeweiligen Entnahmepositionen gebracht.
- Es kann die Entnahme durchgeführt werden.
- Nach der Entnahme wird der Bodenträger 10 mittels der Drehplattform 5a in seine ursprüngliche Orientierung gebracht. Mit der Linearverschiebeeinrichtung wird der Bodenträger 10a auf den Variostellplatz 6 gebracht.
- Die Transportplattform 9 entnimmt den Bodenträger 10a vom Variostellplatz 6.
- Der auf der Transportplattform 9 befindliche Bodenträger 10 wird nun wieder in die alte Abgabeposition Stellplatz 2 gebracht.
- Der Bodenträger 10a wird von der Drehplattform 5 mittels der Linearverschiebeeinrichtung 16 auf die Drehplattform 5a verschoben.
- Mit der Linearverschiebeeinrichtung 1 wird der Bodenträger 10a von der Drehplattform 5a auf den Variostellplatz 6 gebracht.
- Die Transportplattform 9 schleust den Bodenträger 10a in seine ursprüngliche Entnahmeposition aus.

Der oben beschriebene Vorgang kann an beiden Seiten des Linearverfahrweges durchgeführt werden.

Für eine Transporteinrichtung mit zehn Stellplätzen ergibt sich folgende Berechnung der Transportzeit:
Bei einer Regalbreite von 1m und einer linearen Beschleunigung und Verzögerung, wobei die Geschwindigkeit der Transportplattform von 8 m/sec und einer Beschleunigung von 8 m/sec² beträgt, beträgt die Verfahrzeit zu einem am weitesten entfernten Stellplatz ca. 1 sec. Dabei finden die Drehvorgänge der Transportplattform in eine für den Transport günstige Orientierung in einer Zeit von 500 mm/sec. statt. Der Bodenträger mit Aufbau wird auf die Drehplattform aufgegeben. Es ergibt sich eine Gesamtkommissionszeit von 4 sec. Bei einem System mit 20 Stellplätzen erhöht sich diese Zeit auf 4,58 sec.

## Patentansprüche

1. Hochgeschwindigkeitsbereitstellungs- und Transporteinrichtung zum Einsatz insbesondere im Lager- und Sortierbereich, **dadurch gekennzeichnet**, daß eine auf einer Führung/einem Schlitten (8) verfahrbare, bahngesteuerte gegenüber der Führung/dem Schlitten (8) drehbare Transportplattform (9) vorhanden ist, auf der ein mit Gütern/Objekten versehene Bodenträger (10, 10a) fest fixierbar ist, wobei die Transportplattform (9) einen Servoantrieb zur Durchführung der Linear- und Drehbewegung sowie zur Steuerung eines Ein- und Ausschleusmechanismusses für den Bodenträger (10, 10a) aufweist, mit an jedem Stell- und Abgabeplatz angeordneten Drehplattformen (5, 5a) auf die die Bodenträger (10, 10a) von der Transportplattform (9) ausschleusbar bzw. überführbar sind, wobei jede Drehplattform (5, 5a) einen Fixiermechanismus zum Fixieren des Bodenträgers (10, 10a) aufweist.

2. Hochgeschwindigkeitbereitstellungs- und Transporteinrichtung nach Anspruch 1, **dadurch gekennzeichnet**, daß mehrere Transportplattformen (9) vorhanden sind.

3. Hochgeschwindigkeitbereitstellungs- und Transporteinrichtung nach Anspruch 1 oder 2, **dadurch gekennzeichnet**, daß ein Variostellplatz (6) zur Aufnahme von Bodenträger (10, 10a) vorhanden ist.

4. Hochgeschwindigkeitbereitstellungs- und Transporteinrichtung nach einem der vorangegangenen Ansprüche, **dadurch gekennzeichnet**, daß die Transportplattform (9) um 360° drehbar ist.

5. Hochgeschwindigkeitbereitstellungs- und Transporteinrichtung nach einem der vorangegangenen Ansprüche, **dadurch gekennzeichnet**, daß jede an einem Abgabe- und/oder Stellplatz (2, 3) angeordnete Drehplattform (5, 5a) um +/- 90 Grad drehbar ist und eine Linearverschiebeeinrichtung aufweist zur Verschiebung des Bodenträgers (10, 10a) auf die nachfolgend angeordnete Drehplattform.

6. Hochgeschwindigkeitbereitstellungs- und Transporteinrichtung nach einem der vorangegangenen Anspr üche, **dadurch gekennzeichnet**, daß der Bodenträger (10, 10a) unterseitig ein Fixiergehäuse (12) für die Fixiereinrichtung und den Entnahmemechanismus (15) der Transportplattform (9) aufweist und mit Bodenrollen (11) versehen ist und oberseitig eine Aufnahme für beliebige Aufbauten (16) aufweist.

7. Verfahren zur Bereitstellung und Transport von Gütern/Objekten bei dem ein mit Gütern versehener Bodenträger (10, 10a) durch eine drehbare Transportplattform (9) aufgenommen und zu einem Abgabeplatz (4) mit hoher Geschwindigkeit und mit einer für die Verfahrgeschwindigkeit günstigsten Orientierung transportiert wird, dort auf eine Drehplattform (5) überführt, durch entsprechende Drehung der Drehplattform (5) in die gewünschte Entnahmeposition gebracht und nach der Entnahme der leere Bodenträger (10) zu einem Variostellplatz (6) durch eine Linearverschiebeeinrichtung transportiert wird, von dem er durch die Transportplattform (9) aufgenommen und zu vorgesehenem Stellplatz (2) gebracht wird, wobei die Schritte mit einer zeitlichen Verzögerung durch einen zweiten Bodenträger (10a) ausgeführt werden, so daß der Bestückungs- und Transportvorgang kontinuierlich stattfindet.

8. Verfahren nach Anspruch 7, **dadurch gekennzeichnet**, daß die zeitliche Verzögerung so bemessen ist, daß die Transportplattform (9) mit dem zweiten Bodenträger (10) dann am Abgabeplatz (4) ankommt, wenn der erste Bodenträger (10) zum Variostellplatz transportiert wird.

## Claims

1. A high-speed marshalling and conveying system for use particularly for storage and sorting, characterised in that a conveying platform (9) is provided, which is mobile on a guide or slide (8), is track-controlled and rotatable relatively to the guide or slide (8), on which platform a base support (10, 10a) provided with goods or objects can be rigidly fixed, the transport platform (9) comprising a servo drive for carrying out the linear and rotary movement and for controlling an entry and exit mechanism for the base support (10, 10a), with rotary platforms (5, 5a) at each parking and delivery station, on to which rotary platforms (5, 5a) the base supports (10, 10a) can be exited or transferred from the transport platform (9), each rotary platform (5, 5a) having a fixing mechanism for fixing the base support (10, 10a).

2. A high-speed marshalling and conveying system according to claim 1, characterised in that a plurality of transport platforms (9) are provided.

3. A high-speed marshalling and conveying system according to claim 1 or 2, characterised in that a variable parking station (6) is provided for receiving base supports (10, 10a).

4. A high-speed marshalling and conveying system according to any one of the preceding claims, characterised in that the transport platform (9) is rotatable through 360°.

5. A high-speed marshalling and conveying system according to any one of the preceding claims, characterised in that each rotary platform (5, 5a) disposed at a delivery and/or parking station (2, 3) is rotatable through ± 90° and comprises a linear displacement system for displacing the base support (10, 10a) on to the next rotary platform.

6. A high-speed marshalling and conveying system according to any one of the preceding claims, characterised in that the base support (10, 10a) comprises at the bottom a fixing housing (12) for the fixing means and the removal mechanism (15) of the transport platform (9) and is provided with base rollers (11) and has at the top a holder for any desired superstructure (16).

7. A method of marshalling and conveying goods/objects wherein a base support (10, 10a) provided with goods is received by a rotatable transport platform (9) and is conveyed to a delivery station (4) at high speed and with the optimum orientation for the speed of travel, is transferred there to a rotary platform (5), brought into the required removal position by appropriate rotation of the rotary platform (5), and after removal the empty base support (10) is conveyed to a variable parking place (6) by a linear displacement system, from which variable parking station (6) it is received by the transport platform (9) and brought to the intended parking station (2), the steps being performed with a delay by a second base support (10a) so that the loading and transport operation takes place continuously.

8. A method according to claim 7, characterised in that the delay is such that the transport platform (9) with the second base support (10) arrives at the delivery station (4) when the first base support (10) is being conveyed to the variable parking station.

## Revendications

1. Installation de préparation et de transport à grande vitesse destinée à des emplacements de stockage et de triage,
caractérisée par
une plate-forme de transport (9) mobile sur un moyen de guidage/traîneau (8), commandé sur sa trajectoire et qui peut tourner par rapport au moyen de guidage/traîneau (8), plate-forme sur laquelle peut se fixer solidairement un support de sol (10, 10a), ayant reçu des produits/objets, la plate-forme de transport (9) ayant un entraînement asservi pour effectuer les mouvements linéaires et de rotation ainsi que pour commander un mécanisme d'entrée et de sortie pour le support de sol (10, 10a), et des plates-formes tournantes (5, 5a) prévues à chaque emplacement de positionnement et d'émission sur lesquelles peuvent être transférés les supports de sol (10, 10a) à partir de la plate-forme de transport (9), chaque plate-forme tournante (5, 5a) ayant un mécanisme de blocage pour bloquer le support de sol (10, 10a).

2. Installation de préparation et de transport à grande vitesse selon la revendication 1,
caractérisée par
plusieurs plates-formes de transport (9).

3. Installation de préparation et de transport à grande vitesse selon la revendication 1 ou 2,
caractérisée par
un emplacement variable (6) pour recevoir les supports de sol (10, 10a).

4. Installation de préparation et de transport à grande vitesse selon l'une des revendications précédentes,
caractérisée en ce que
la plate-forme de transport (9) peut tourner de 360°.

5. Installation de préparation et de transport à grande vitesse selon l'une des revendications précédentes,
caractérisée en ce que
chaque plate-forme tournante (5, 5a), prévue au niveau de chaque emplacement d'émission et/ou emplacement de stockage (2, 3), peut tourner de +/- 90° et comporte une installation de translation linéaire pour déplacer les supports de sol (10, 10a) vers la plate-forme tournante suivante.

6. Installation de préparation et de transport à grande vitesse selon l'une des revendications précédentes,
caractérisée en ce que
le support de sol (10, 10a) comporte sur sa face inférieure un boîtier de blocage (12) pour l'installation de blocage et le mécanisme d'extraction (15) de la plate-forme de transport (9) et est muni de galets de roulement (11) pour rouler sur le sol, et, sur sa face supérieure, la plate-forme comporte un logement pour des superstructures (16), quelconques.

7. Procédé pour préparer et transporter des marchandises/objets
selon lequel
un support de sol (10, 10a) chargé de marchandises est reçu par une plate-forme de transport (9), tournante, et est transporté vers un emplacement d'émission (4) à vitesse élevée et avec une orientation favorable pour la vitesse de déplacement, pour y être transféré à une plate-forme tournante (5), et être mis par une rotation appropriée de la plate-forme tournante (5) dans la position de prise souhaitée et, après la prise, le support de sol vide (10), est transporté à un emplacement de stockage variable (6) par une installation de transfert linéaire et, de là, le support est reçu par la plate-forme de transport (9) pour être conduit à l'emplacement de stockage (2), prévu, les étapes étant exécutées avec une temporisation dans le temps par un second support de sol (10a) pour que l'opération de chargement et de transport se fasse en continu.

8. Procédé selon la revendication 7,
caractérisé en ce que
la temporisation est choisie pour que la plate-forme de transport (9) arrive à l'emplacement d'émission avec le second support de sol (10) seulement lorsque le premier support de sol (10) a été transporté jusqu'à l'emplacement de stockage variable.
